# EUROPÄISCHE PATENTSCHRIFT

(11) **EP 2 895 765 B1**
(45) Veröffentlichungstag und Bekanntmachung des Hinweises auf die Patenterteilung: **10.07.2019**
(21) Anmeldenummer: 13762496.1
(22) Anmeldetag: 16.09.2013
(51) Int. Cl.: F16D 65/18

(54) **SCHEIBENBREMSE FÜR EIN FAHRZEUG**
DISK BRAKE FOR A VEHICLE
FREIN À DISQUE POUR VÉHICULE

(30) Priorität: 17.09.2012 DE 102012108689
(43) Veröffentlichungstag der Anmeldung: 22.07.2015
(73) Patentinhaber: KNORR-BREMSE Systeme für Nutzfahrzeuge GmbH, 80809 München (DE)
(72) Erfinder: ADAMCZYK, Philipp, 87677 Stöttwang (DE); EICHLER, Thomas, München 80809 (DE); HABERL-GÜNTHNER, Paul, 94474 Vilshofen (DE); NESMJANOWITSCH, Igor, 94491 Hengersberg (DE); TRIMPE, Robert, 82234 Weßling (DE); WEBER, Ralf, 80992 München (DE)
(86) Internationale Anmeldenummer: PCT/EP2013/069119
(87) Internationale Veröffentlichungsnummer: WO 2014/041156

(56) Entgegenhaltungen:
- EP-A1- 1 944 522
- WO-A1-2004/074705
- DE-A1- 4 215 200
- DE-A1-102007 024 787
- DE-U1-202007 005 313

## Beschreibung

Die vorliegende Erfindung betrifft eine Scheibenbremse für ein Fahrzeug, insbesondere ein Nutzfahrzeug gemäß dem Oberbegriff der Anspruchs 1.

Scheibenbremsen, insbesondere solche für Nutzfahrzeuge, deren Kraftverstärkung nach dem Exzenterhebelprinzip funktioniert, sind überwiegend als sogenannte Axialscheibenbremsen ausgeführt, bei denen die Bewegungsrichtung eines Stößels eines pneumatisch oder hydraulisch betriebenen Bremszylinders parallel oder zumindest annähernd parallel zur Zuspannrichtung einer Zuspanneinheit der Scheibenbremse verläuft. Solche Scheibenbremsen sind beispielsweise aus der DE 10 2007 024 787 A1, der WO 2004/074705 A1 oder der EP 1 944 522 A1 bekannt. Der Stößel betätigt dabei einen Hebel, beispielsweise einen Exzenterhebel mit einem Armteil und einem Exzenterteil, der im Bremssattel abgestützt ist und die von dem Stößel auf den Bremshebel ausgeübte Kraft auf im Bremssattel verdrehbar gelagerte Stellspindeln überträgt, wobei die Bremskraft von den Stellspindeln weiter auf einen oder mehrere Bremsbeläge übertragen wird, die gegen eine Bremsscheibe gedrückt werden. Die Verschwenkung des Hebels erfolgt dabei in der Regel über eine Wälzrolle, die an dem Hebel axial und radial gesichert anliegt, wobei durch die Verschwenkung des Hebels um die Wälzrolle der Exzenterteil des Hebels in Richtung der Stellspindeln drückt.

Aus der DE 10 2007 024 787 A1 und der EP 1 944 522 A1 ist es außerdem bekannt, die Wälzrolle in einer Aufnahmebohrung des Hebels und Aufnahmebohrungen in einer Zuspannwelle am drehbaren Ende des Hebels drehbar um eine Längsachse der Wälzrolle zu lagern.

Bei Scheibenbremsen, bei denen die die Kraft auf den Hebel ausübenden Stößel des Bremszylinders in einem Winkel zur Zuspanneinheit steht, ist der lange Hebelarm des Hebels in Bezug auf dessen Gegenlager im Bremssattel ungünstig geneigt. Insbesondere bei so genannten Radial-Scheibenbremsen ist der Bremszylinder und damit auch dessen Stößel annähernd orthogonal zur Zuspanneinheit angeordnet. Dabei liegt der lange Hebelarm, auf dessen eines Ende der Stößel bei einem Bremsvorgang drückt, so ungünstig, dass die für das Momentengleichgewicht entscheidende theoretische Länge dieses langen Hebelarms das Gegenlager im Bremssattel kreuzt.

Problematisch an dieser Bauweise ist dabei die Auslegung des Hebels hinsichtlich seiner Festigkeit sowie die Gestaltung des Gegenlagers im Bremssattel. Der Hebel muss meist mit einer starken Kröpfung versehen werden, um den langen Hebelarm von der Schwenkachse des Hebellagers zum Angriffspunkt des Stößels des Bremszylinders zu führen. Diese Bauweise ist mit einem hohen Materialeinsatz für den Hebel verbunden, was eine große Masse des Hebels zur Folge hat, die sich wiederum negativ auf das Schwingungsverhalten sowie die benötigten Rückstellkräfte im Rückhub auswirkt.

Aus der DE 20 2007 005 313 U1 ist es bekannt, einen Armteil des Hebels im Querschnitt zur Längserstreckung des Hebelarms rechteckig mit sich zu einem Exzenterteil des Hebels aufweitenden Querschnitt zu formen, der zwar die nötige Festigkeit aufweist, was jedoch, wie zuvor beschrieben, einen hohen Materialeinsatz erfordert.

Aufgabe der vorliegenden Erfindung ist es, eine Scheibenbremse der gattungsgemäßen Art mit verbessertem Schwingungsverhalten zu entwickeln, bei der außerdem die Montage erleichtert ist.

Diese Aufgabe wird durch eine Scheibenbremse mit den Merkmalen des Anspruchs 1 gelöst.

Erfindungsgemäß ist auf einer Unterseite des Armteils des Hebels, von der sich das Exzenterteil des Hebels erstreckt, ein sich in Längserstreckung des Hebels erstreckender Steg angeformt, in dem die Aufnahme zur Lagerung der Wälzrolle vorgesehen ist.

Die Anformung eines solchen Steges an dem Hebel dient dabei nicht nur der Aufnahme der Wälzrolle in Gestalt einer kreisförmigen Öffnung, sondern auch der Stabilisierung bzw. Formgebung des Hebels als Biegeträger. Dadurch kann insbesondere der Armteil des Hebels deutlich schlanker ausgeführt werden, was mit einer geringeren Hebelmasse und damit auch einem stark verbesserten Schwingungsverhalten durch die verbesserte Schwerpunktlage gegenüber herkömmlichen Hebelgeometrien einhergeht.

Der so gestaltete Hebel ist außerdem für formgebende Verfahren wie Schmieden oder Gießen optimal geformt.

Es ist außerdem denkbar, zur Herstellung dieses Hebels Halbzeuge zu verwenden, die zum Beispiel mit Strangguss hergestellt wurden.

Vorteilhafte Ausführungsvarianten der Erfindung sind Gegenstand der Unteransprüche.

Nach einer vorteilhaften Weiterbildung der Erfindung ist im Bremssattel ein Gegenlager geformt, an dem die Wälzrolle abgestützt ist. Dieses Gegenlager im Bremssattel ist vorzugsweise geteilt ausgebildet, wobei der Steg des Hebels in einer Bremsstellung in einer Unterbrechung der Gegenlagers des Bremssattels eingeschwenkt ist.

Auch hier erweist sich die Formgebung des Hebels als Biegeträger vorteilhaft, da die Unterbrechung des Gegenlagers des Bremssattels relativ schmal ausgeführt sein kann.

Gemäß einer weiteren vorteilhaften Ausführungsvariante der Erfindung ist der Hebel um die Wälzrolle verdrehbar mittels einer Lagerschale gelagert. Solche Lagerschalen, insbesondere sogenannte DU-Lagerschallen zeichnen sich durch eine geringe Abnutzung und geringe Reibung aus.

Gemäß einer weiteren Ausführungsvariante der Erfindung ist die Wälzrolle axial mit mindestens eines Halteelements gesichert in Hebel gelagert. Besonders bevorzugt ist ein Halteelement als Halteblech ausgebildet und ein weiteres Halteelement als Schaltgabel zum Eingriff mit einer vorzugsweise in der Scheibenbremse vorgesehenen Nachstelleinrichtung ausgebildet.

Mit einem solchen Halteblech ist die Wälzrolle in einfacherweise durch jegliche kraftschlüssige Verbindungsverfahren an dem Hebel befestigbar. Durch die Ausführung eines der Halteelemente als Schaltgabel erfüllt dieses Halteelement seine Funktion als axiale Fixierung der Wälzrolle als auch zur Betätigung der Nachstelleinrichtung bei Betätigung des Hebels.

Besonders bevorzugt ist zwischen den Haltelementen und der Wälzrolle mindestens ein Federelement eingesetzt, mit dem die Wälzrolle axial stets zentrierbar ist. Das Federelement ist dabei vorzugsweise als Tellerfeder ausgebildet.

Nachfolgend wird ein Ausführungsbeispiel der Erfindung anhand der beigefügten Zeichnungen näher beschrieben. Es zeigen:
- Figur 1: eine perspektivische Explosionsdarstellung eines Bremssattels und eines Hebels einer Ausführungsvariante einer erfindungsgemäßen Scheibenbremse;
- Figur 2: die in Figur 1 gezeigten Bauteile im zusammengebauten Zustand mit teilweise aufgeschnittenem Bremssattel;
- Figur 3: eine Seitenschnittansicht durch den Bremssattel bei maximal ausgelenktem Hebel;
- Figur 4: eine weitere Schnittansicht durch den Bremssattel entlang der Rotationsachse der Wälzrolle;
- Figur 5: eine weitere Schnittansicht durch den Bremssattel entlang der Linie X-X in Figur 4 und
- Figur 6: eine Schnittansicht durch den Bremssattel entlang der Linie Z-Z in Figur 5

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, des Bremssattels, des Hebels, der Wälzrolle und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

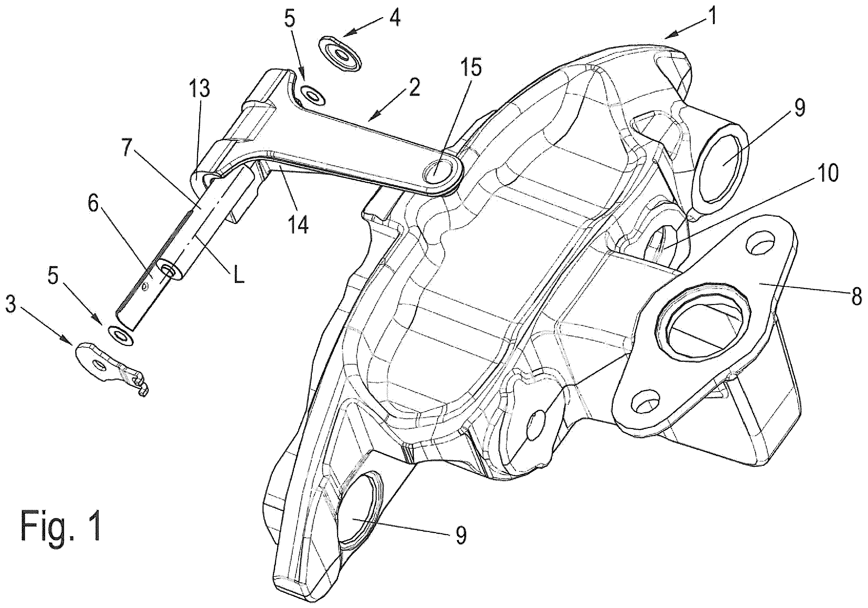

In der Figur 1 ist in einer Explosionsdarstellung ein Bremssattel 1 sowie ein Hebels 2 und eine Wälzrolle 7 einer Scheibenbremse für ein Fahrzeug, insbesondere ein Nutzfahrzeug, mit darin bevorzugt vorgesehenen Aufnahmen 9 zur Aufnahme von Befestigungsmitteln zur Befestigung des Bremssattels vorzugsweise an einem Bremsträger und einer Aufnahme 10 zur Aufnahme einer Nachstelleinrichtung dargestellt.

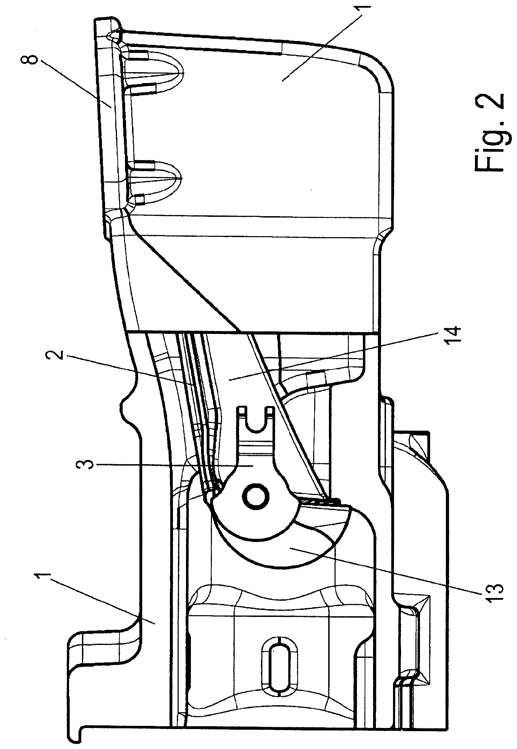

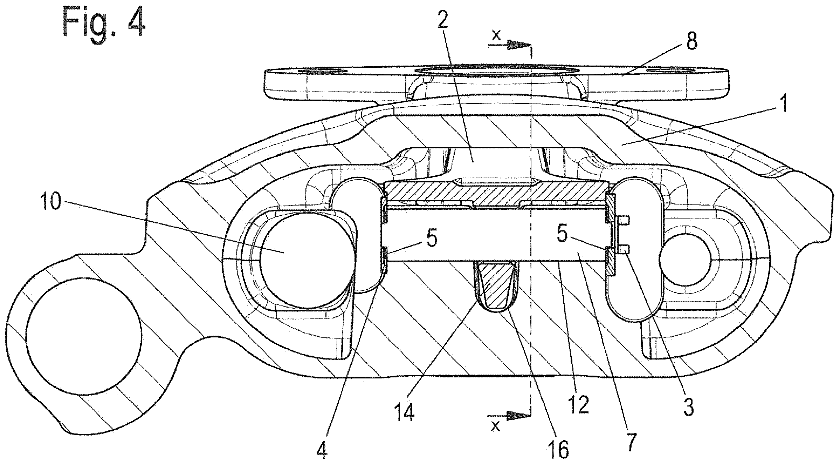

Der Hebel 2 stützt sich dabei im zusammengebauten Zustand der Scheibenbremse, wie in den Figuren 2 bis 6 gezeigt, im Inneren des Bremssattels 1 ab und bildet einen Teil einer im Bremssattel angeordneten Zuspanneinrichtung, mit der bei einer Bremsung mindestens ein Bremsbelag (nicht gezeigt) an eine ebenfalls nicht in den Zeichnungen dargestellte Bremsscheibe andrückbar ist. Die Zuspanneinrichtung weist des Weiteren im Bremssattel 1 verdrehbar gelagerte Stellspindeln auf, die vorzugsweise parallel und mit Abstand zueinander in einer Brücke angeordnet sind.

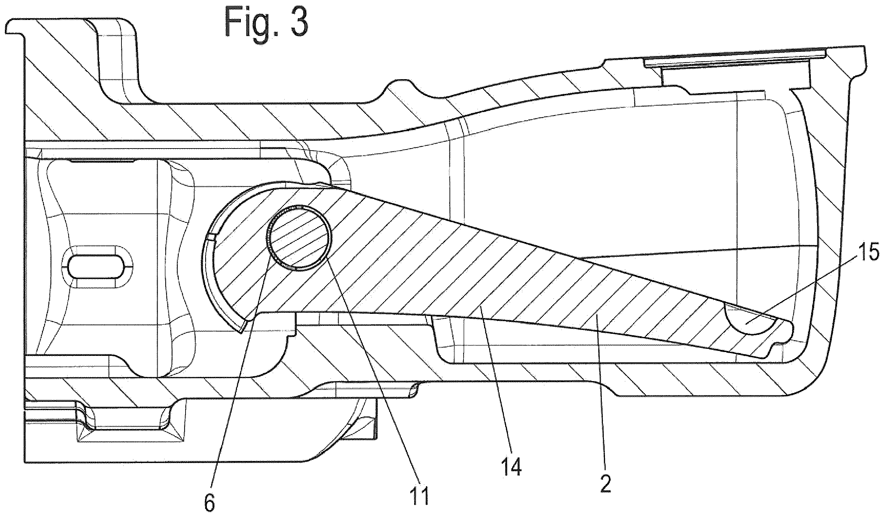

Wie in den Figuren 1 und 3 gut zu erkennen ist, weist der als Exzenterhebel ausgebildete Hebel ein Armteil und ein Exzenterteil 13 auf, wobei am von dem Exzenterteil 13 beabstandeten Ende des Armteils des Hebels 2 eine Vertiefung 15 vorgesehen ist, in die ein Stößel eines nicht gezeigten Bremszylinders eingreift und den Hebel 2 von einer Nichtbremsstellung in eine in Figur 3 gezeigte Bremsstellung drückt. Dabei wird der Hebel 2 um die Längsachse L der Wälzrolle 7 verschwenkt, die an dem Hebel 2 axial und radial gesichert anliegt.

Wie in den Figuren 1 und 3 ebenfalls gut zu erkennen ist, ist an dem Hebel 2 auf einer Unterseite des langen Arms des Hebels 2, in die sich auch das Exzenterteil 13 des Hebels 2 hin erstreckt, ein Steg 14 angeformt, der insbesondere im Bereich der größten angreifenden Kräfte an dem Hebel 2 bei einem Bremsvorgang den Arm des Hebels 2 als Biegeträger ausbildet, so dass der Hebel 2 bei ansonsten relativ flacher Gestaltung und geringer Materialdicke die notwendige Stabilität aufweist.

Im Bereich vor dem Exzenterteil 13 des Hebels 2 weist der Steg 14 eine vorzugsweise kreisförmige Öffnung auf, durch die die Wälzrolle 7 bei der Montage durchsteckbar ist und so in der Aufnahme 11 des Hebels 2 um die Längsachse L der Wälzrolle 7 drehbar gelagert ist.

Anstelle des als Exzenterhebel ausgebildeten Hebels 2 ist ebenso denkbar, den Hebel 2 beispielsweise als Kniehebel oder andere zur Kraftverstärkung geeignete Hebelform auszubilden.

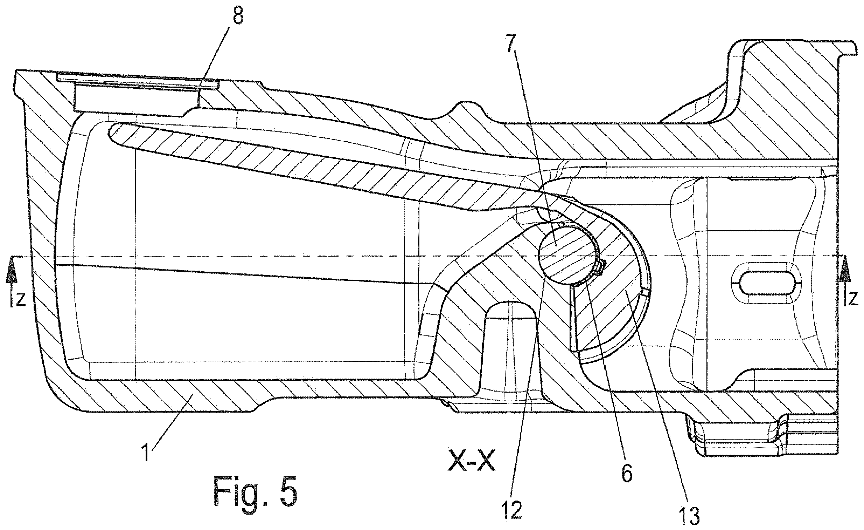

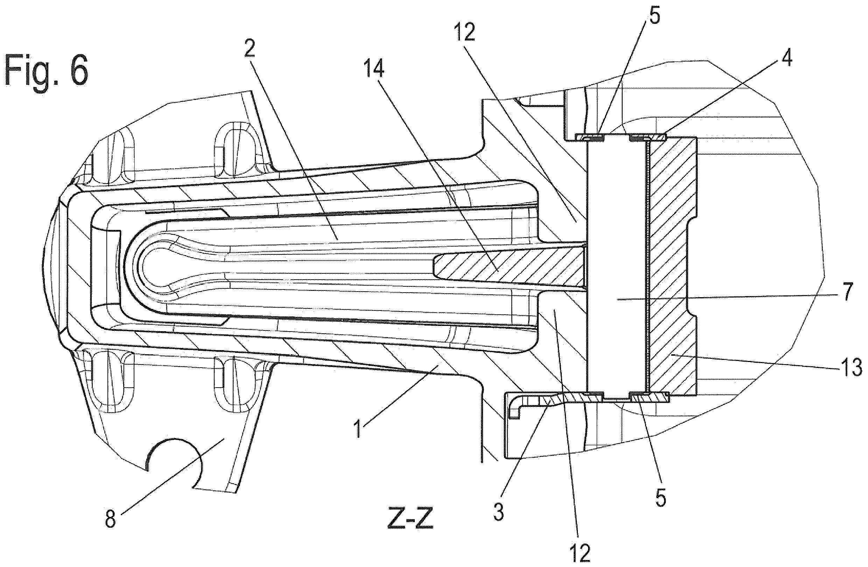

Wie in den Figuren 5 und 6 gut zu erkennen ist, ist ein Gegenlager 12 im Bremssattel 1, an dem die Wälzrolle 7 im eingebauten Zustand anliegt, geteilt ausgebildet, insbesondere zweigeteilt mit einer Unterbrechung 16, wobei der Steg 14 des Hebels 1 in einer Bremsstellung in der Unterbrechung 16 des Gegenlagers 12 des Bremssattels eingeschwenkt ist.

Zur axialen Fixierung der Wälzrolle 7 ist diese an ihre Stirnseite durch Halteelemente 3, 4 am Hebel 2 gesichert. Dabei ist, wie in den Figuren 1, 2 und 4 besonders gut zu erkennen ist, eines der Haltelemente 4 vorzugsweise als Halteblech ausgebildet. Sofern die Scheibenbremse mit einer Nachstelleinrichtung ausgebildet ist, die beispielsweise in der Aufnahme 10 des Bremssattels 1 montiert ist, ist das Halteelement 3 auf der dieser Nachstelleinrichtung zugewandten Seite als Schaltgabel zur Betätigung der Nachstelleinrichtung ausgebildet.

Die Halteelemente 3, 4 sind dabei fest mit dem Hebel 2 verbunden, so dass eine Verschwenkung des Hebels 2 auch einer Verschwenkung des als Schaltgabel ausgebildeten Halteelements 3 bewirkt.

Um eine Rotationsbewegung der Wälzrolle 7 um die Längsachse L der Wälzrolle 7 gegenüber dem Hebel 2 ausführen zu können, ist, wie in Figur 3 und 5 gut zu erkennen ist, ein Gleit- oder Rolllager 6 eingesetzt. Besonders bevorzugt wird hier eine Lagerschale, insbesondere eine DU-Lagerschale eingesetzt. Denkbar ist aber auch der Einsatz eines Wälzlagers geeigneter Bauart.

Wie in Figur 5 gezeigt ist, ist das Gleit- oder Rolllager 6 in den Bereichen, in denen die Wälzrolle 7 am Lager 12 im Bremssattel 7 anliegt, unterbrochen. Im Bereich der Aufnahme 11 der Wälzrolle 7 umschließt das Gleit- oder Rolllager 6 die Wälzrolle 7 bevorzugt um 360°.

Die die Wälzrolle 7 axial begrenzenden Haltelemente 3, 4 sind mit dem Hebel 2 fest verbunden. Diese Verbindung kann durch jegliche kraftschlüssige Verbindungsverfahren ausgeführt sein, beispielsweise durch Nieten, Schrauben, Schweißen, Klemmen, etc.. Ebenfalls denkbar ist es, durch die Formgebung des Hebels 2 einseitig eines der Halteelemente direkt am Hebel anzuformen, beispielsweise durch Angießen, Anschmieden oder einen durch spannende Bearbeitung erzeugten Steg.

Da beim Zuspannen der Scheibenbremse unter Umständen auch Querkräfte, d.h. Kräfte in Richtung der Längsachse L der Wälzrolle 7 auf die Wälzrolle 7 wirken, ist bevorzugt zwischen mindestens einem der Halteelemente 3, 4 und der Stirnseite der Wälzrolle 7 ein Federelement 5 eingesetzt, um die Wälzrolle 7 nach einem geringfügigen Verschieben auf Grund der genannten Querkräfte zurück in eine zentrierte Lage zwischen den Halteelementen 3, 4 zu positionieren. Ein weiterer Vorteil des Einsatzes solcher Federelemente, beispielsweise in Gestalt von Tellerfedern, Zylinderdruckfedern, Scheiben mit federnder Wirkung oder Elastomerfedern ist auch darin zu sehen, dass durch die Querkräfte ansonsten bedingte bleibende Deformierungen der Halteelemente 3, 4 oder Eingrabungen in die Halteelemente 3, 4 verhindert werden.

### Bezugszeichenliste

- 1: Bremssattel
- 2: Hebel
- 3: Schaltgabel
- 4: Halteblech
- 5: Federelement
- 6: Lager
- 7: Wälzrolle
- 8: Flansch
- 9: Aufnahme
- 10: Aufnahme
- 11: Aufnahme
- 12: Gegenlager
- 13: Exzenterteil
- 14: Steg
- 15: Vertiefung
- 16: Unterbrechung

## Patentansprüche

1. Scheibenbremse für ein Fahrzeug, insbesondere ein Nutzfahrzeug, aufweisend
a) einen eine Bremsscheibe übergreifenden Bremssattel (1),
b) eine im Bremssattel (1) angeordnete Zuspanneinrichtung, mit der bei einer Bremsung mindestens ein Bremsbelag an die Bremsscheibe andrückbar ist,
c) in dem Bremssattel (1) verdrehbar gelagerte Stellspindel(n),
d) einen im Bremssattel (1) sich abstützenden Hebel (2) zur Krafteinleitung auf den mindestens einen Bremsbelag,
e) wobei die Zuspanneinrichtung eine Wälzrolle (7) aufweist, die an dem Hebel (2) axial und radial gesichert anliegt,
f) wobei die Wälzrolle (7) in einer Aufnahme (11) des Hebels (2) um eine Längsachse (L) der Wälzrolle (7) drehbar gelagert ist,
g) wobei der Hebel ein Armteil und ein Exzenterteil (13) aufweist,
**dadurch gekennzeichnet, dass**
h) auf einer Unterseite des Armteils des Hebels (2), von der sich das Exzenterteil (13) des Hebels (2) erstreckt, ein sich in Längserstreckung des Hebels (2) erstreckender Steg (14) angeformt ist, in dem die Aufnahme (11) zur Lagerung der Wälzrolle (7) vorgesehen ist.

2. Scheibenbremse nach Anspruch 1, **dadurch gekennzeichnet, dass** im Bremssattel (7) ein Gegenlager (12) geformt ist, an dem die Wälzrolle (7) abgestützt ist.

3. Scheibenbremse nach Anspruch 2, **dadurch gekennzeichnet, dass** das Gegenlager (12) im Bremssattel (1) geteilt ist, wobei der Steg (14) des Hebels (1) in einer Bremsstellung in einer Unterbrechung (16) des Gegenlagers (12) des Bremssattels (1) eingeschwenkt ist.

4. Scheibenbremse nach einem der vorstehenden Ansprüche, **dadurch gekennzeichnet, dass** die Aufnahme (11) zur Lagerung der Wälzrolle (7) als kreisförmige Öffnung ausgebildet ist.

5. Scheibenbremse nach einem der vorhergehenden Ansprüche, **dadurch gekennzeichnet, dass** der Hebel (2) um die Wälzrolle (7) verdrehbar mittels einem Gleit- oder Rolllager (6) gelagert ist.

6. Scheibenbremse nach Anspruch 5, **dadurch gekennzeichnet, dass** das Gleit- oder Rolllager (6) als Lagerschale (6) ausgebildet ist.

7. Scheibenbremse nach einem der vorhergehenden Ansprüche, **dadurch gekennzeichnet, dass** die Wälzrolle (7) axial mittels mindestens eines Halteelements (3, 4) gesichert im Hebel (2) gelagert ist.

8. Scheibenbremse nach Anspruch 7, **dadurch gekennzeichnet, dass** mindestens ein Halteelement (4) als Halteblech ausgebildet ist.

9. Scheibenbremse nach einem der vorhergehenden Ansprüche, **dadurch gekennzeichnet, dass** im Bremssattel (1) eine Nachstelleinrichtung positioniert ist, mit der über eine axiale Verstellung der Stellspindeln eine verschleißbedingte Änderung eines Lüftspiels zwischen dem Bremsbelag und der Bremsscheibe ausgleichbar ist.

10. Scheibenbremse nach Anspruch 9, **dadurch gekennzeichnet, dass** mindestens ein Halteelement (3) als Schaltgabel zum Eingriff mit der Nachstelleinrichtung der Scheibenbremse ausgebildet ist.

11. Scheibenbremse nach einem der vorhergehenden Ansprüche, **dadurch gekennzeichnet, dass** die Wälzrolle (7) durch mindestens ein Federelement (5) zwischen den die Wälzrolle (7) axial im Hebel (2) sichernden Halteelementen (3, 4) zentriert ist.

12. Scheibenbremse nach nspruch 12, **dadurch gekennzeichnet, dass** das mindestens ein Federelement (5) als Tellerfeder (5) ausgebildet ist.

13. Scheibenbremse nach einem der vorhergehenden Ansprüche, **dadurch gekennzeichnet, dass** der Hebel (2) als Exzenterhebel ausgebildet ist.

## Claims

1. A disc brake for a vehicle, in particular a utility vehicle, having
a) a brake calliper (1) spanning a brake disc,
b) an application device arranged in the brake calliper (1) by means of which at least one brake pad can be pressed onto the brake disc during a braking action,
c) an adjusting spindle or spindles mounted in the brake calliper such that it is/they are able to rotate,
d) a lever (2) supported in the brake calliper (1) for the application of force to the at least one brake pad,
e) the application device having a roller (7), that abuts on the lever (2) such that it is secured axially and radially,
f) the roller (7) being mounted in a receiver (11) of the lever (2) such that it is able to rotate about a longitudinal axis (L) of the roller (7),
g) the lever having an arm portion and an eccentric portion (13),
**characterised in that**
h) integrally formed on an underside of the arm portion of the lever (2) from which the eccentric portion (13) of the lever (2) extends is a bar (14) that forms a longitudinal extension of the lever (2) and in which is provided the receiver (11) for mounting the roller (7).

2. A disc brake according to claim 1, **characterised in that** forming an integral part of the brake calliper (1) is a counter bearing (12) on which the roller (7) is supported.

3. A disc brake according to claim 2, **characterised in that** the counter bearing (12) is divided in the brake calliper (1), the bar (14) of the lever (2) being swung into a recess (16) of the counter bearing (12) of the brake calliper (1) in a braking position.

4. A disc brake according to any of the preceding claims, **characterised in that** the receiver (11) for mounting the roller (7) takes the form of a circular opening.

5. A disc brake according to any of the preceding claims, **characterised in that** the lever (2) is mounted such that it is able to rotate about the roller by means of a slide or roller bearing (6).

6. A disc brake according to claim 5, **characterised in that** the sliding or roller bearing (6) takes the form of a bearing shell (6).

7. A disc brake according to any of the preceding claims, **characterised in that** the roller (7) is mounted securely axially in the lever (2) by means of at least one holder element (3, 4).

8. A disc brake according to claim 7, **characterised in that** at least one holder element (4) is designed as a holder plate.

9. A disc brake according to any of the preceding claims, **characterised in that** positioned in the brake calliper (1) is an adjusting device by means of which it is possible to compensate for a wear-related variation in the air gap between the brake pad and the brake disc by axially adjusting the adjusting spindles.

10. A disc brake according to claim 9, **characterised in that** at least one holder element (3) takes the form of a shift fork for engaging with the adjusting device of the disc brake.

11. A disc brake according to any of the preceding claims, **characterised in that** the roller (7) is centred by means of at least one spring element (5) between the holder elements (3, 4) that secure the roller (7) axially in the lever (2).

12. A disc brake according to claim 12, **characterised in that** at least one spring element (5) takes the form of a disc spring (5).

13. A disc brake according to any of the preceding claims, **characterised in that** the lever (2) is designed as an eccentric lever.

## Revendications

1. Frein à disque de véhicule, notamment de véhicule utilitaire, comportant
a) un étrier (1) de frein, chevauchant un disque de frein,
b) un dispositif de serrage, qui est monté dans l'étrier (1) de frein et par lequel, lors d'un freinage, au moins une garniture de frein peut être serrée contre le disque de frein,
c) une ou des broches de réglage, montées tournantes dans l'étrier (1) de frein,
d) un levier (2), s'appuyant sur l'étrier (1) de frein pour appliquer une force à la au moins une garniture de frein,
e) dans lequel le dispositif de serrage a un rouleau (7) de roulement, qui s'applique, en étant fixé axialement et radialement, au levier (2),
f) dans lequel le rouleau (7) de roulement est monté tournant autour d'un axe (L) longitudinal du rouleau (7) de roulement dans un logement (11) du levier (2),
g) dans lequel le levier a une partie de bras et une partie (13) d'excentrique,
**caractérisé en ce que**
h) d'un côté inférieur de la partie de bras du levier (2), à partir duquel s'étend la partie (13) d'excentrique du levier (2), est formée une barrette (14), qui s'étend suivant l'étendue longitudinale du levier (2) et dans laquelle est prévu le logement (11) de montage du rouleau (7) de roulement.

2. Frein à disque suivant la revendication 1, **caractérisé en ce qu'**une contreportée (12) est formée dans l'étrier (7) de frein et sur laquelle le rouleau (7) de roulement est appuyé.

3. Frein à disque suivant la revendication 2, **caractérisé en ce que** la contreportée est fendue dans l'étrier (1) de frein, la barrette (14) du levier (1) étant, dans une position de freinage, pivotée dans une interruption (16) de la contreportée (12) de l'étrier (1) de frein.

4. Frein à disque suivant l'une des revendications précédentes, **caractérisé en ce que** le logement (11) est, pour le montage du rouleau (7) de roulement, constitué sous la forme d'une ouverture circulaire.

5. Frein à disque suivant l'une des revendications précédentes, **caractérisé en ce que** le levier (2) est monté tournant autour du rouleau (7) de roulement, au moyen d'un palier (6) lisse ou à rouleau.

6. Frein à disque suivant la revendication 5, **caractérisé en ce que** le palier (6) lisse ou à rouleau est constitué sous la forme d'un coussinet (6).

7. Frein à disque suivant l'une des revendications précédentes, **caractérisé en ce que** le rouleau (7) à roulement est monté fixé axialement, au moyen d'au moins un élément (3, 4) de maintien, dans le levier (2).

8. Frein à disque suivant la revendication 7, **caractérisé en ce qu'**au moins un élément (4) de maintien est constitué sous la forme d'une tôle de maintien.

9. Frein à disque suivant l'une des revendications précédentes, **caractérisé en ce que**, dans l'étrier (1) de frein, peut être placé un dispositif de rattrapage, par lequel, par un déplacement axial des broches de réglage, une modification, due à l'usure, d'un jeu entre la garniture de frein et le disque de frein peut être compensée.

10. Frein à disque suivant la revendication 9, **caractérisé en ce qu'**au moins un élément (3) de maintien est constitué sous la forme d'une fourchette de manoeuvre pour la prise avec le dispositif de rattrapage du frein à disque.

11. Frein à disque suivant l'une des revendications précédentes, **caractérisé en ce que** le rouleau (7) de roulement est centré par au moins un élément (5) de ressort entre les éléments (3, 4) de maintien fixant axialement le rouleau (7) de roulement dans le levier (2).

12. Frein à disque suivant la revendication 11, **caractérisé en ce que** le au moins un élément (5) de ressort est constitué sous la forme d'un ressort (5) à disque.

13. Frein à disque suivant l'une des revendications précédentes, **caractérisé en ce que** le levier (2) est constitué sous la forme d'un levier d'excentrique.
